# EUROPEAN PATENT APPLICATION

(11) **EP 3 989 026 A1**
(43) Date of publication of application: **27.04.2022**
(21) Application number: 20827267.4
(22) Date of filing: 01.06.2020
(51) Int. Cl.: G05B 23/02, G06Q 10/00, G06Q 50/04

(54) **ASSISTANCE DEVICE, DISPLAY DEVICE, ASSISTANCE METHOD, AND ASSISTANCE PROGRAM**

(30) Priority: 19.06.2019 JP 2019113699
(71) Applicant: SUMITOMO HEAVY INDUSTRIES, LTD., Tokyo 141-6025 (JP)
(72) Inventor: AKEDO, Yutaka, Yokosuka-shi, Kanagawa 237-8555 (JP); KADOWAKI, Masanori, Yokosuka-shi, Kanagawa 237-8555 (JP)
(74) Representative: Louis Pöhlau Lohrentz
(86) International application number: PCT/JP2020/021562
(87) International publication number: WO 2020/255684

(57) **Abstract**

Provided is a supporting device (10) for supporting an operation of a plant (1). The supporting device includes a question output unit (18) that outputs a question based on process data of the plant (1); an answer reception unit (20) that receives an answer to the question output from the question output unit (18); and an estimation information output unit (22) that outputs estimation information that supports the operation of the plant (1) on the basis of the answer received by the answer reception unit (20).

## Description

### Technical Field

Certain embodiments of the invention relates to a supporting device, a display device, a supporting method, and a supporting program for supporting the operation of a plant.

### Background Art

When a trouble with a high degree of difficulty occurs, there is a case where a plant operator asks a plant maker possessing specialized technology to investigate the cause of the trouble. The plant maker who has received the request receives process data together with the contents of the trouble from the plant operator, and checks and determines the data from a plurality of viewpoints on the basis of the know-how of process evaluation, thereby erasing candidate causes of the trouble, finding out a true cause and informing the plant operator of an estimation cause.

Additionally, as a means for finding out the cause of the trouble, it is known to identify the estimation cause of trouble by answering an interactive question by a user, for example, as in PTLs 1 to 3.

### Citation List

### Patent Literature

[PTL 1] Japanese Unexamined Patent Publication No. 2018-173784
[PTL 2] Japanese Unexamined Patent Publication No. 4-317132
[PTL 3] Japanese Unexamined Patent Publication No. 2005-148867

### Summary of Invention

### Technical Problem

However, in the related art, the plant maker possessing the specialized technology received the contents of the trouble received from a business operator and its process data and analyzes the contents and the process data, thereby finally identifying the estimation cause. Therefore, there is a case where substantial time is taken from a cause of the trouble to the restoration thereof and production efficiency decreases.

One of the exemplary objects of an aspect of the present invention is to provide a supporting device, a display device, a supporting method, and a supporting program capable of estimating information related to changes in the operation status of a plant while suppressing a decrease in production efficiency.

### Solution to Problem

In order to solve the above problems, a supporting device of an aspect of the present invention is a supporting device for supporting an operation of a plant, the supporting device including a question output unit that outputs a question based on process data of the plant; an answer reception unit that receives an answer to the question output from the question output unit; and an estimation information output unit that outputs information that supports the operation of the plant on the basis of the answer received by the answer reception unit.

According to the above aspect, since the supporting device according to the present embodiment outputs a question based on the process data of the plant and outputs the estimation information that supports the operation of the plant on the basis of the answer received with respect to the output question, the user can visually and intuitively understand the contents of the question in which the actual operation status of the plant is considered. Accordingly, it is possible to estimate information related to changes in the operation status of the plant while suppressing a decrease in production efficiency.

The supporting device of another aspect of the present invention is a supporting device for supporting an operation of a plant, the supporting device including a question output unit that outputs a question regarding an operation status of the plant; an answer reception unit that receives an answer to the question output from the question output unit; an estimation information output unit that outputs estimation information that supports the operation of the plant on the basis of the answer received by the answer reception unit; and a user evaluation reception unit that receives a user evaluation on the estimation information output from the estimation information output unit.

According to the above aspect, the question regarding the operation status of the plant is output, the estimation information that supports the operation of the plant is output on the basis of the answer received with respect to the output question, and the user evaluation is received on the estimation information. For this reason, for example, since the user himself/herself can answer and evaluate the question, it is possible to suppress a decrease in the production efficiency. Accordingly, it is possible to estimate information related to changes in the operation status of the plant while suppressing a decrease in production efficiency.

Another aspect of the present invention is a display device. This device is a display device for supporting an operation of a plant, the display device is configured to display a question regarding an operation status of the plant, and the question includes information based on process data of the plant for supporting the answer to the question.

Yet another aspect of the present invention is a supporting method. This method is a supporting method for supporting an operation of a plant, the supporting method including outputting a question based on process data of the plant by a question output unit; receiving an answer to the question output from the question output unit, by an answer reception unit; and outputting, by an information output unit, estimation information that supports the operation of the plant on the basis of the answer received by the answer reception unit.

The supporting method of another aspect of the present invention is a supporting method for supporting an operation of a plant, the supporting method including outputting a question regarding an operation status of the plant, by a question output unit; receiving an answer to the question output from the question output unit, by an answer reception unit; outputting, by an estimation information output unit, estimation information that supports the operation of the plant on the basis of the answer received by the answer reception unit; and receiving a user evaluation on the estimation information output from the estimation information output unit, by a user evaluation reception unit.

Still another aspect of the present invention is a supporting program. This program is a supporting program executed on a computer to support an operation of a plant, the program causing the computer to execute outputting a question based on process data of the plant by a question output unit; receiving an answer to the question output from the question output unit, by an answer reception unit; and outputting, by an estimation information output unit, estimation information that supports the operation of the plant on the basis of the answer received by the answer reception unit.

The support program of another aspect of the present invention is a supporting program executed on a computer to support an operation of a plant, the program causing the computer to execute outputting a question regarding an operation status of the plant, by a question output unit; receiving an answer to the question output from the question output unit, by an answer reception unit; outputting, by an estimation information output unit, estimation information that supports the operation of the plant on the basis of the answer received by the answer reception unit; and receiving a user evaluation on the estimation information output from the estimation information output unit, by a user evaluation reception unit.

In addition, optional combinations of the above components and those obtained by substituting the components or expressions of the present invention with each other among methods, devices, systems, computer programs, data structures, recording media, and the like are also effective as aspects of the present inventions.

### Advantageous Effects of Invention

According to the present invention, it is possible to estimate information related to changes in the operation status of the plant while suppressing a decrease in production efficiency.

### Brief Description of Drawings

Fig. 1 is a view showing a configuration of a supporting device 10 according to an embodiment of the present invention.
Fig. 2 is a view showing an example of a hardware configuration of the supporting device 10.
Fig. 3 is a flowchart showing an example of a supporting method by the supporting device 10.
Fig. 4 is a flowchart showing the example of the supporting method by the supporting device 10.
Fig. 5 is a view for explaining the supporting method by the supporting device 10.
Fig. 6 is a view for explaining the supporting method by the supporting device 10.

### Description of Embodiments

Hereinafter, the present invention will be described through an embodiment of the invention with reference to the drawings, but the following embodiment does not limit the invention according to the claims. Additionally, all combinations of features described in the embodiment are not limited to being essential to the solution of the invention. The same or equivalent components, members, and processing shown in the respective drawings will be designated by the same reference numerals, and the redundant descriptions thereof will be appropriately omitted.

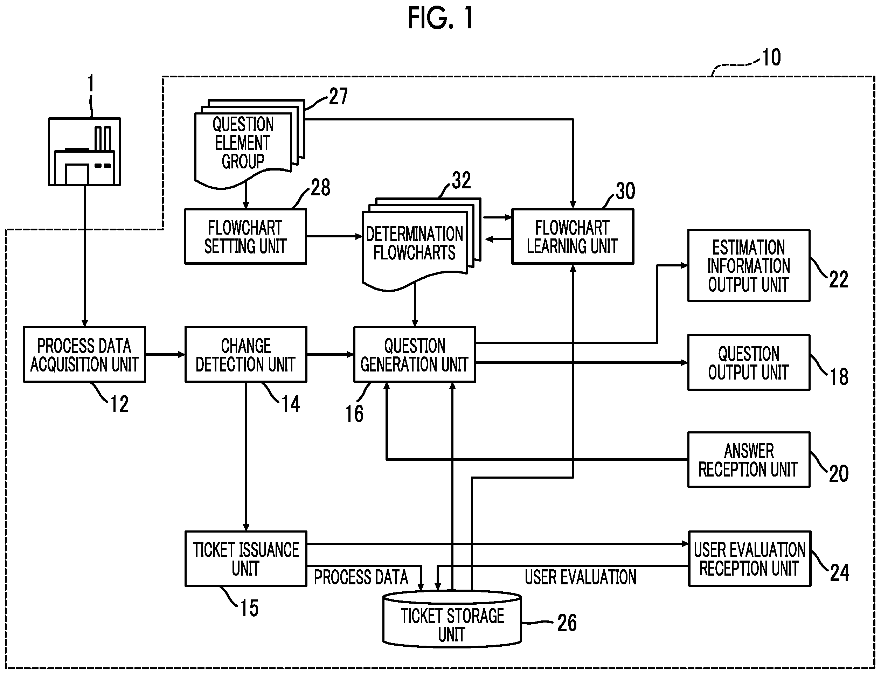

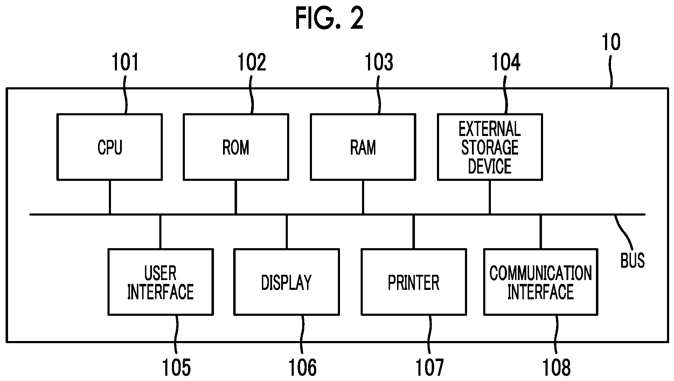

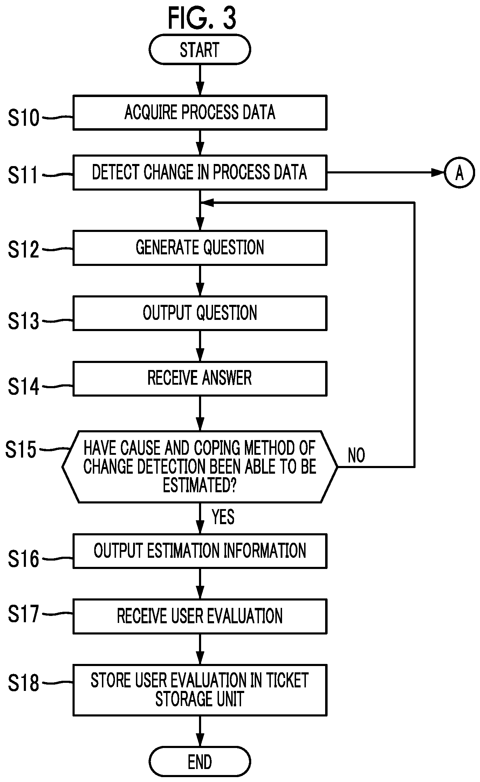

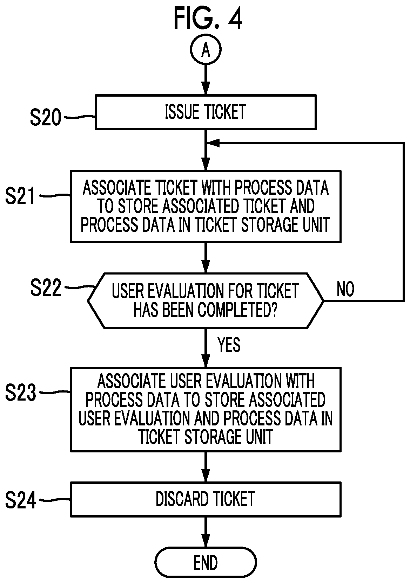

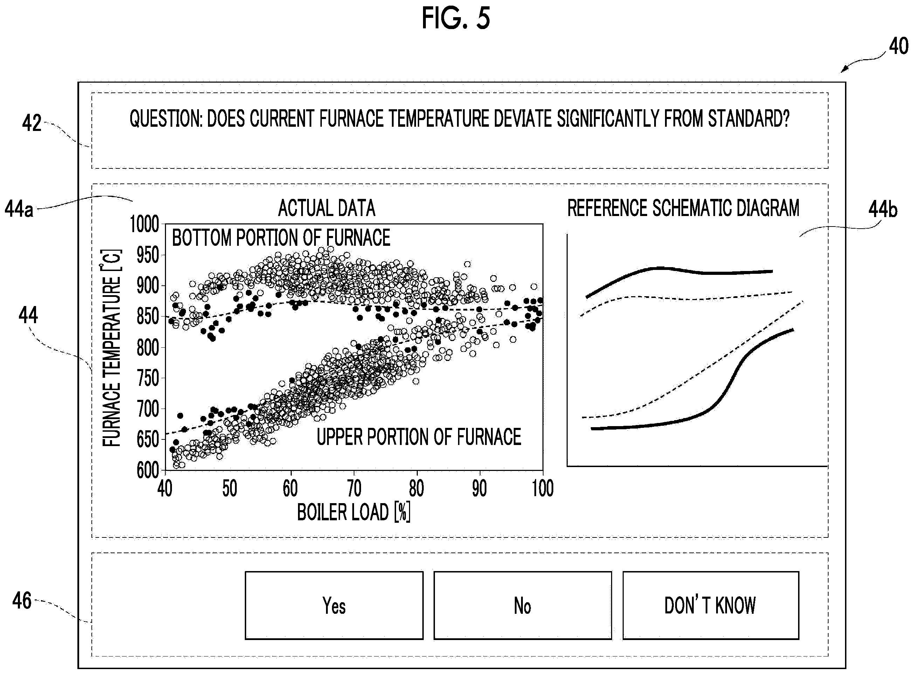

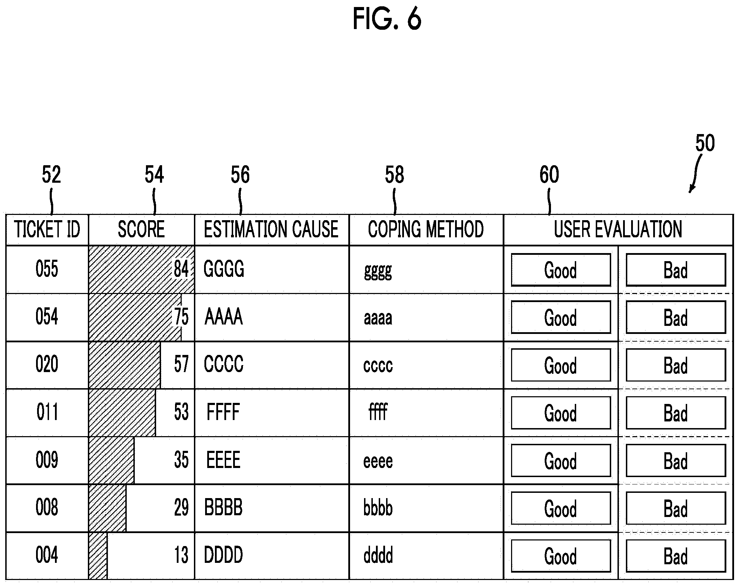

Figs. 1 to 6 are views for explaining a supporting device and a supporting method according to the embodiment of the present invention. Specifically, Fig. 1 is a view showing a configuration of a supporting device 10 according to an embodiment of the present invention, and Fig. 2 is a view showing an example of a hardware configuration of the supporting device 10. Additionally, Figs. 3 and 4 are flowcharts showing an example of the supporting method by the supporting device 10, and Figs. 5 and 6 are views for explaining the example of the supporting method.

The supporting device 10 is a device that supports the operation of the plant 1. Examples of the plant 1 include power plants, incineration plants, chemical plants, or the like. Optional process data is used in the plant 1. The process data is, for example, data of process values such as temperature, pressure, air volume, concentration, or component. Specifically, the process values of the process data may include measured values detected by sensors (not shown) installed in the plant 1 and manipulated variables based on differences between set values and the measured values for points detected by the sensors. The process data obtained from the plant 1 is multidimensional data in which hundreds or more types are present.

The supporting device 10 is connected to a plurality of sensors (not shown) provided in the plant and a control device (not shown) that controls the plant, and acquires the process data acquired from the sensors and the control device. According to the supporting device 10, in a case where the acquired process data has changed, information related to the changes in the process data can be estimated.

A predetermined program necessary for executing the supporting method according to the present embodiment is pre-installed in the supporting device 10, and Fig. 2 shows an example of the hardware configuration. Specifically, a general-purpose or dedicated computer including a CPU 101, a ROM 102, a RAM 103, an external storage device 104, a user interface 105, a display 106, a printer 107, and a communication interface 108 can be applied to the supporting device 10. The CPU 101 performs a calculation on the basis of the information input from a worker by the user interface 105, outputs the calculation result to the display 106 or the printer 107, and while the worker recognizes the output, required information can be input to the supporting device 10 by the user interface 105.

The supporting device 10 may be one including a single computer or may be one including a plurality of computers distributed on a network. In the supporting device 10, for example, the CPU can execute a predetermined program (a program that defines the supporting method according to the present embodiment) stored in the above-described ROM, RAM, external storage device, or the like or downloaded via a communication network, thereby cause the supporting device 10 to function as various functional blocks or various steps to be described below.

Hereinafter, various functional blocks of the supporting device 10 will be described.

The supporting device 10 according to the present embodiment includes a process data acquisition unit 12, a change detection unit 14, a ticket issuance unit 15, a question generation unit 16, a question output unit 18, an answer reception unit 20, an estimation information output unit 22, a user evaluation reception unit 24, a ticket storage unit 26, a flowchart setting unit 28, and a flowchart learning unit 30.

The process data acquisition unit 12 acquires the process data of the plant. The process data is for operating the plant and can also be referred to as operation data. The process data is, for example, data showing changes in process values over time. In this case, the process data may be continuous changes in process values at predetermined time intervals. The process data is the multidimensional data. The process data acquired by the process data acquisition unit 21 is stored in the supporting device 10 together with the information on the timing of the plant.

The change detection unit 14 monitors the process data acquired by the process data acquisition unit 12 to detect a change in the process data. For example, the change detection unit 14 may monitor the process data and notify a user in a case where the tendency of the process data has changed as compared to the previous state, and the user may determine the presence or absence of ae change in the process data. Alternatively, the change detection unit 14 may not notify the user in a case where the tendency of the process data has changed compared to the previous state of the process data, and the change detection unit 14 may determine that the process data has changed.

The ticket issuance unit 15 issues a ticket on the basis of a fact that the change detection unit 14 detects that the process data has changed. The ticket is for managing a single incident in which it is detected that the process data has changed. The ticket is issued each time it is detected that the process data has changed. The ticket issued by the ticket issuance unit 15 is stored in the ticket storage unit 26 in association with the process data in a certain period including ticket issuance time (or time when the process data has changed). By issuing and managing such a ticket, it is possible to easily and accurately manage a plurality of incidents that occur in the plant 1.

When the change detection unit 14 detects that the process data has changed, the question generation unit 16 generates a question regarding the operation status of the plant on the basis of a determination flowchart in order to estimate a cause and a coping method for the change. The details of question generation based on the determination flowchart will be described below. The question generation unit 16 may generate a question on the basis of a fact that a change from the change detection unit 14 has been detected, or the question generation unit 16 may generate a question on the basis of the ticket issuance from the ticket issuance unit 15. Additionally, the question generation unit 16 may generate a question including information based on the process data associated with the ticket stored in the ticket storage unit 26.

When the change detection unit 14 detects that the process data has changed, the question output unit 18 outputs the question generated by the question generation unit 16. In this way, a question for identifying the cause and the coping method for the change in the process data is presented to the user. The question output unit 18 may be a display device that displays a question.

The answer reception unit 20 receives an answer to the question output from the question output unit 18. Specifically, the answer reception unit 20 receives an answer from the user regarding the question presented to the user by the question output unit 18. For example, the question output unit 18 may output some answer options corresponding to the question together, and the answer reception unit 20 may be configured to receive the answer from the user in a selection format. In this way, a series of flow from question generation to answer reception is repeated as many times as required, and the cause and the coping method for the change in the process data are estimated.

The estimation information output unit 22 outputs estimation information indicating the estimation cause, the coping method, and the like for the change in the process data. This estimation information may be generated by the question generation unit 16. In this way, the estimation information that supports the operation of the plant related to a change in the process data is presented to the user.

The user evaluation reception unit 24 receives a user evaluation on the estimation information output from the estimation information output unit 22. Specifically, after a ticket is issued from the ticket issuance unit 15, the user evaluation reception unit 24 receives the user evaluation on the estimation information related to the change in the process data associated with the ticket. For example, some options may be output, and the user evaluation reception unit 24 may be configured to receive the evaluation from the user in a selection format. The user evaluation is performed after countermeasures have been taken to eliminate the cause of occurrence of the change in the process data. The user evaluation received by the user evaluation reception unit 24 is associated with the ticket related to the user evaluation and stored in the ticket storage unit 26.

The ticket storage unit 26 stores one or a plurality of tickets issued by the ticket issuance unit 15 and process data associated with each ticket. Additionally, when the user evaluation by the user evaluation reception unit 24 is completed, the user evaluation associated with each ticket is stored together in the ticket storage unit 26. In the ticket storage unit 26, a ticket ID, a score, an estimation cause, a coping method, a user evaluation, and the like may be stored in association with each ticket. In addition, the ticket ID may be a number or information on ticket issuance date and time.

Next, the details of the question generation by the question generation unit 16 will be described. The question generation unit 16 generates a question on the basis of a determination flowchart 32. Here, the determination flowchart 32 includes one or a plurality of selection-format questions according to the symptom of the change in the process data detected by the change detection unit 14. For example, in a case where the determination flowchart 32 includes a plurality of selection-format questions, each question is generated by the question generation unit 16 and output from the question output unit 18 in accordance with the order of the flowchart. In addition, as the determination flowchart 32, for example, an existing troubleshooting flowchart known to a plant designer can be used, and the specific contents thereof are omitted in the present embodiment.

The flowchart setting unit 28 sets the determination flowchart 32. In the initial stage of the supporting device 10, for example, an expert such as a plant maker engineer can combine a question element group 27, so that the flowchart setting unit 28 can set a first determination flowchart 32.

The flowchart learning unit 30 updates the determination flowchart 32 on the basis of the information stored in the ticket storage unit 26. Specifically, the flowchart learning unit 30 updates the determination flowchart 32 on the basis of the process data and the user evaluation associated with each ticket. For example, in the case of "Bad" indicating that the user evaluation regarding the estimation information output from the estimation information output unit 22 is bad, the flowchart learning unit 30 updates the determination flowchart 32 by modifying, adding, or deleting at least one question regarding the determination flowchart 32 related to this estimation information. For example, the user evaluation reception unit 24 receives the correct answers or alternative candidates regarding the reason, estimation cause, or countermeasure method for being "Bad" from the user, and the flowchart learning unit 30 may update the determination flowchart 32 on the basis of the information. On the other hand, in the case of "Good" indicating that the user evaluation regarding the estimation information output from the estimation information output unit 22 is good, the flowchart learning unit 30 continues the contents of the determination flowchart 32 related to the estimation information. By updating or evaluating the determination flowchart 32 by the flowchart learning unit 30 in this way, the accuracy of the estimation information output from the estimation information output unit 22 can be improved. In addition, the accuracy of this estimation information is calculated as a score, and the score is associated with the related ticket and stored in the ticket storage unit 26.

In addition, the specific operation of the various functional blocks of the supporting device 10 described above will be described in more detail in the supporting method to be described below.

Hereinafter, an example of the operation using the supporting device 10 will be described as the supporting method according to the embodiment of the present invention while referring to Figs. 3 to 6. Fig. 3 is an example of the overall supporting method according to the present embodiment. Fig. 4 shows an example of a supporting method from ticket issuance to ticket discard. Additionally, Fig. 5 shows an example of a display mode regarding the question output by the question output unit 18, and Fig. 6 shows an example of the display mode regarding the user evaluation received by the user evaluation reception unit 24.

In Fig. 3, first, the process data acquisition unit 12 acquires the process data of the plant 1 (S10) . The process data acquired by the process data acquisition unit 12 is stored in the supporting device 10. The acquisition of the process data by the process data acquisition unit 12 may be performed by receiving an input from the user via the user interface 105.

Next, the change detection unit 14 detects a change in the process data acquired from the process data acquisition unit 12 (S11). The change detection unit 14 may determine, for example, that the process data has changed when a change of a predetermined threshold value or more is detected. Alternatively, the change detection unit 14 may determine that the process data has changed on the basis of the input from the user. In addition, Fig. 3 shows an example in which a change in the process data is detected after the process data is acquired, but the process data acquisition unit 12 may acquire the process data for the first time after determining that the process data has changed. When the change detection unit 14 detects that the process data has changed, the user is notified to that effect.

Next, when it is detected that the process data of the change detection unit 14 has changed, the question generation unit 16 generates a question regarding the operation status of the plant in order to estimate the cause and the coping method for the change (S12) . Here, in a first question generation, for example, when the user inputs what kind of symptom the change in the process data is caused by, the determination flowchart 32 corresponding to the symptom is read out, and the question generation unit 16 may sequentially generate a plurality of questions of the determination flowchart 32 according to the order of the read flowchart. When it is detected that the process data of the change detection unit 14 has changed, the ticket issuance unit 15 issues a ticket (refer to Fig. 4). The subsequent flow of the issued ticket will be separately described.

After Step S12, the question generated by the question generation unit 16 is output from the question output unit 18 (S13), and the answer reception unit 20 receives an answer from the user to the question (S14).

Here, Fig. 5 is an example of the display screen 40 for the question output from the question output unit 18. The display screen 40 is displayed on the display 106. In the example of Fig. 5, the display screen 40 has a question display region 42 in which the contents of the question are displayed, an answer support display region 44 that supports the answer from the user to the question, and a selection item display region 46 that prompts the user to answer. In this example, "Question: Does the current furnace temperature deviate significantly from the standard?" is displayed in the question display region 42, information based on the process data is displayed in the answer support display region 44 in order to support the answer to the contents of the question, and "Yes", "No", and "Don't know" are displayed as answer options in the selection item display region 46. In the answer support display region 44, a two-dimensional coordinate graph 44a of actual data with the vertical axis representing the furnace temperature [°C] and the horizontal axis representing the boiler load [%] is displayed on the left side of the screen, and a reference schematic diagram 44b of an actual data graph is displayed on the right side of the screen. The reference schematic diagram 44b is schematically shown in order to tell the point of view for determining the answer to the question to the user. In this way, the question output from the question output unit 18 includes information based on process data such as the actual data graph 44a and the reference schematic diagram 44b, so that the user can answer while visually and intuitively grasping this information. Therefore, it is possible to improve the ease of answer by the user. Accordingly, for example, even an inexperienced operator who does not have sufficient knowledge can easily and accurately answer. In addition, since this information is based on the actual operation status of the plant, the cause of a trouble can be identified more accurately than, for example, in an aspect in which the user himself/herself identifies the estimation cause of the trouble simply in the form of a dialogue.

Returning to Fig. 3, after the answer reception unit 20 receives the answer, it is determined whether or not the cause and the coping method for the change detection can be estimated (S15) . When the estimation cause and the coping method are not known in Step S15 (NO of S15), the process returns to the question generation in S12, and S12 to S14 are repeated. On the other hand, when the estimation cause and the coping method are known in Step S15 (YES of S15), the estimation information output unit 22 outputs the estimation information regarding the change in the process data (S16).

After that, the user evaluation reception unit 24 receives a user evaluation (S17), and in a case where the user evaluation is received, the user evaluation is stored in the ticket storage unit 26 (S18).

Fig. 6 is an example of a display screen 50 regarding the user evaluation received by the user evaluation reception unit 24. The display screen 50 is displayed on the display 106. In the example of Fig. 6, the display screen 50 has respective display regions for a ticket ID 52, a score 54, an estimation cause 56, a coping method 58, and a user evaluation 60. The ticket ID is for identifying a ticket, and for example, tickets are numbered in chronological order. In Fig. 6, discarded ticket IDs are deleted, and the tickets remaining without being discarded are displayed in chronological order from the bottom. The score 54 indicates the accuracy of the estimation information including the estimation cause 56 and the coping method 58. For example, the larger the score, the higher the accuracy of the estimation information. The user evaluation 60 is, for example, a display region for entering the user evaluation for the estimation information. As shown in Fig. 6, for example, "Good" indicating that the user evaluation is good and "Bad" indicating that the user evaluation is bad are shown so that one of the evaluations can be selected. The user visually recognizes the display screen 50 and inputs the user evaluation to the display region of the user evaluation 60 for each ticket. The ticket to which the user evaluation 60 is input is discarded from the ticket storage unit 26 and deleted from the display screen 50. In addition, the user evaluation 60 is not limited to the two choices of "Good" and "Bad", and an evaluation of three levels or more may be entered or respective items of the estimation cause 56 and the coping method 58 may be evaluated. Additionally, in addition to the display of Fig. 6, for example, in the case of "Bad", an item for receiving the reason, the estimation cause, or the correct answer of the coping method may be displayed. The display mode of such an item is not limited, and the user may input the content thereof, or the user may select from some candidates.

Next, a processing flow after the ticket issuance unit 15 issues a ticket will be described with reference to Fig. 4. When the ticket issuance unit 15 issues a ticket (S20), a ticket ID is given, and the ticket ID and the process data are associated with each other and stored in the ticket storage unit 26 (S21) . Additionally, after the estimation information is output from the estimation information output unit 22 and the coping method based on the estimation information is executed, the ticket issuance unit 15 notifies the user via the user evaluation reception unit 24 so as to prompt the user to evaluate whether or not the estimation information is appropriate. In this case, the ticket issuance unit 15 may notify the user via the user evaluation reception unit 24 after a certain period of time has elapsed from the issuance of the ticket. In a case where the user evaluation for the ticket is completed (YES of S22), the process data associated with the ticket and the user evaluation are associated and stored in the ticket storage unit 26 (S23) . Then, the flowchart learning unit 30 updates the determination flowchart 32 on the basis of the information stored in the ticket storage unit 26. Additionally, the ticket ID for which the user evaluation has been completed is discarded from the ticket storage unit 26 together with each information associated with the ticket ID and is deleted from the display screen 50 of Fig. 6. On the other hand, in a case where the user evaluation for the ticket is not completed (NO of S22), the process returns to Step S21.

In this way, by managing the evaluation of the coping method of the change from the time when it is detected that the process data has changed by issuing and discarding tickets, a plurality of various incidents that occur in the plant 1 can be easily and accurately managed.

As described above, since the supporting device according to the present embodiment outputs a question based on the process data of the plant and outputs the estimation information that supports the operation of the plant on the basis of the answer received with respect to the output question, the user can visually and intuitively understand the contents of the question. Accordingly, it is possible to estimate information related to changes in the operation status of the plant while suppressing a decrease in production efficiency. Additionally, since the user evaluation is received for the estimation information that supports the operation of the plant, the accuracy of the estimation information can be improved.

The present invention is not limited to the above embodiment and can be applied in various modifications. In the above embodiment, a configuration including the ticket issuance unit 15 and the ticket storage unit 26 has been described, but the configuration of both may be omitted. That is, the user evaluation and the update of the flowchart may be performed without adopting the concept of the ticket. Additionally, the operation of the supporting device 10 is not limited to one in which the operation is all automated by the calculation processing of the computer but also includes one in which the manual work by the worker is interposed in at least a portion of the operation. Additionally, in the above embodiment, the display modes of Figs. 5 and 6 by the display unit are merely examples and are not limited thereto. In addition, the question output from the question output unit 18 may be related to the operation status of the plant and is not limited to the question output based on the process data related to the actual operation status.

The aspects of implementation described through the embodiment of the present invention can be used by appropriately combining, altering, or improving depending on applications, and the present invention is not limited to the description of the above-described embodiment. It is apparent from the description of the claims that forms to which such combinations, alterations, or improvements are added may also be included in the technical scope of the present invention.

### Reference Signs List

- 10:: Supporting device
- 12:: Process data acquisition unit
- 14:: Change detection unit
- 16:: Question generation unit
- 18:: Question output unit
- 20:: Answer reception unit
- 22:: Estimation information output unit
- 24:: User evaluation reception unit
- 26:: Ticket storage unit
- 28:: Flowchart setting unit
- 30:: Flowchart learning unit

## Claims

1. A supporting device for supporting an operation of a plant, the supporting device comprising:
a question output unit that outputs a question based on process data of the plant;
an answer reception unit that receives an answer to the question output from the question output unit; and
an estimation information output unit that outputs estimation information that supports the operation of the plant on the basis of the answer received by the answer reception unit.

2. A supporting device for supporting an operation of a plant, the supporting device comprising:
a question output unit that outputs a question regarding an operation status of the plant;
an answer reception unit that receives an answer to the question output from the question output unit;
an estimation information output unit that outputs estimation information that supports the operation of the plant on the basis of the answer received by the answer reception unit; and
a user evaluation reception unit that receives a user evaluation on the estimation information output from the estimation information output unit.

3. The supporting device according to claim 2, further comprising:
a ticket issuance unit that issues a ticket on the basis of a fact that a change in process data of the plant has been detected.

4. The supporting device according to claim 3, further comprising:
a ticket storage unit that stores the ticket issued by the ticket issuance unit in association with the process data when a change in the process data has been detected.

5. The supporting device according to claim 4,
wherein the ticket storage unit stores the user evaluation received by the user evaluation reception unit.

6. The supporting device according to claim 4 or 5, further comprising:
a flowchart learning unit that updates a determination flowchart on the basis of information stored in the ticket storage unit,
wherein the question output unit outputs a question generated based on the determination flowchart.

7. The supporting device according to any one of claims 1 to 6,
wherein the question output unit outputs the question on the basis of a fact that a change in the process data of the plant has been detected.

8. A display device for supporting an operation of a plant,
wherein the display device is configured to display a question regarding an operation status of the plant, and
the question includes information based on process data of the plant for supporting an answer to the question.

9. The display device according to claim 8,
wherein the question is displayed on the basis of a fact that a change in the process data of the plant has been detected, and
the information is based on the process data when the change in the process data has been detected.

10. A supporting method for supporting an operation of a plant, the supporting method comprising:
outputting a question based on process data of the plant by a question output unit;
receiving an answer to the question output from the question output unit, by an answer reception unit; and
outputting, by an estimation information output unit, estimation information that supports the operation of the plant on the basis of the answer received by the answer reception unit.

11. A supporting method for supporting an operation of a plant, the supporting method comprising:
outputting a question regarding an operation status of the plant, by a question output unit;
receiving an answer to the question output from the question output unit, by an answer reception unit;
outputting, by an estimation information output unit, estimation information that supports the operation of the plant on the basis of the answer received by the answer reception unit; and
receiving a user evaluation on the estimation information output from the estimation information output unit, by a user evaluation reception unit.

12. A supporting program executed on a computer to support an operation of a plant,
the program causing the computer to execute
outputting a question based on process data of the plant by a question output unit;
receiving an answer to the question output from the question output unit, by an answer reception unit; and
outputting, by an estimation information output unit, estimation information that supports the operation of the plant on the basis of the answer received by the answer reception unit.

13. A supporting program executed on a computer to support an operation of a plant,
the program causing the computer to execute outputting a question regarding an operation status of the plant, by a question output unit;
receiving an answer to the question output from the question output unit, by an answer reception unit;
outputting, by an estimation information output unit, estimation information that supports the operation of the plant on the basis of the answer received by the answer reception unit; and
receiving a user evaluation on the estimation information output from the estimation information output unit, by a user evaluation reception unit.
